# EUROPEAN PATENT APPLICATION

(11) **EP 4 806 710 A1**
(43) Date of publication of application: **16.09.2026**
(21) Application number: 25163755.9
(22) Date of filing: 14.03.2025
(51) Int. Cl.: B60L 3/04, B60L 53/16, H01R 13/66

(54) **METHOD FOR DETECTING A FAULT IN THE CONNECTION BETWEEN A CHARGING INLET AND A CHARGING COUPLER**

(71) Applicant: Aptiv Technologies AG, 8200 Schaffhausen (CH)
(72) Inventor: KEPKA, Dariusz, 30-867 Krakow (PL); PIESZKA-LYSON, Monika, 30-705 Kraków (PL)
(74) Representative: INNOV-GROUP

(57) **Abstract**

The method comprises :
- the acquisition (94) of a temperature of a connection terminal of the charging inlet at each instant tᵢ,
- the calculation (96), from the temperature acquired at an instant tᵢ and a temperature acquired at an instant preceding that instant tᵢ and the duration of the time interval separating these two instants, of a slope with which the temperature varies,
- the comparison (98) of the calculated slope with a pre-recorded threshold,
- only when this pre-recorded threshold is crossed, the detection (98) of a fault in the connection between the charging inlet and the charging coupler.

## Description

The invention concerns a method for detecting a fault in the connection between a charging inlet and a charging coupler. The invention also concerns a charging inlet for implementing this method and a vehicle comprising this charging inlet.

Charging inlets are used to electrically connect the battery of an electric or hybrid vehicle to the charging coupler of a charging station in order to recharge the battery.

When the electrical connection between the charging inlet and the charging coupler of a charging station is faulty, this often results in an increase in the electrical resistance of this connection, and therefore in much greater dissipation of energy in the form of heat. As a result, the temperatures of the charging inlet's connection terminals rise more rapidly than would otherwise be the case. If left uncontrolled, terminal temperatures can become high enough to damage the charging inlet. A faulty connection between the charging inlet and the charging coupler can occur, for example, when the charging coupler is damaged.

To overcome this problem, it is known to equip the charging inlet with temperature sensors. These temperature sensors measure the temperature of the charging inlet's electrical connection terminals. To achieve this, each temperature sensor must be both electrically insulated from the connection terminals and thermally connected to these connection terminals. For this purpose, it has been proposed to interpose between each temperature sensor and the terminal whose temperature it measures, an element made of dielectric material which is also a good thermal conductor. Such charging inlets are, for example, disclosed in the following patent applications: EP4272994A1 and EP4056410A1.

During the battery charging process, the temperatures measured by the sensors are transmitted to the on-board computer. The on-board computer then compares these temperatures with a predetermined threshold. If one of the measured temperatures exceeds this predetermined threshold, the on-board computer controls the battery management system to reduce the intensity of the charging current and thus limit the temperature rise of the electrical connection between the charging inlet and the charging coupler.

However, due to the thermal inertia of the dielectric element, there may be a time lag of several tens of seconds between the instant when a connection terminal reaches a given temperature and the instant when this given temperature is measured by the sensor. Thus, in some situations, the connection fault is detected with a delay, which in turn delays the triggering of countermeasures to prevent an excessive rise in the temperature of the charging inlet terminals. As a result of this delay, the charging inlet may be exposed to excessive temperatures, even though it is equipped with temperature sensors designed to prevent this.

The invention aims to remedy this drawback by proposing a method for detecting the fault in the connection between the charging inlet and the charging coupler that is as effective as known methods, while at the same time remedying the problem caused by the thermal inertia of the dielectric elements.

The invention is set out in the attached set of claims.

The invention will be better understood on reading the following description, given only as a non-limiting example and made with reference to the drawings on which :
- Figure 1 is a schematic illustration of the architecture of a vehicle equipped with a charging inlet,
- Figure 2 is a schematic illustration of the vehicle charging inlet shown in Figure 1,
- Figure 3 is a schematic illustration of a printed circuit board of the charging inlet shown in Figure 2,
- Figure 4 is an illustration, in the form of functional blocks, of an information processing treatment implemented in a processor of the printed circuit board shown in figure 3,
- Figure 5 is a flowchart of a method for detecting a fault in the electrical connection of the charging inlet of Figure 2 to a charging coupler,
- Figures 6 and 7 are graphs illustrating the operation of the Figure 5 method in two different situations.

In this description, the terminology, conventions and definitions of the terms used in this text are introduced in Chapter I. Then, detailed examples of embodiments are described in Chapter II with reference to the figures. In Chapter III, variants of these embodiments are presented. Finally, the advantages of the various embodiments are described in Chapter IV.

### Chapter I: Definitions, terminology and conventions :

In the figures, the same references are used to designate the same elements.

In the remainder of this description, features and functions well known to the person skilled in the art are not described in detail.

An electrically conductive material is one whose electrical conductivity at 20°C is greater than 10⁴ S/m or 10⁶ S/m.

An electrically insulating material is one whose electrical conductivity at 20°C is less than 10⁻¹⁰ S/m or 10⁻¹⁴ S/m.

The expression "an element made of material A" or "a material A element" means that material A represents 90% or 95% of the mass of the element.

### Chapter II: Example embodiment

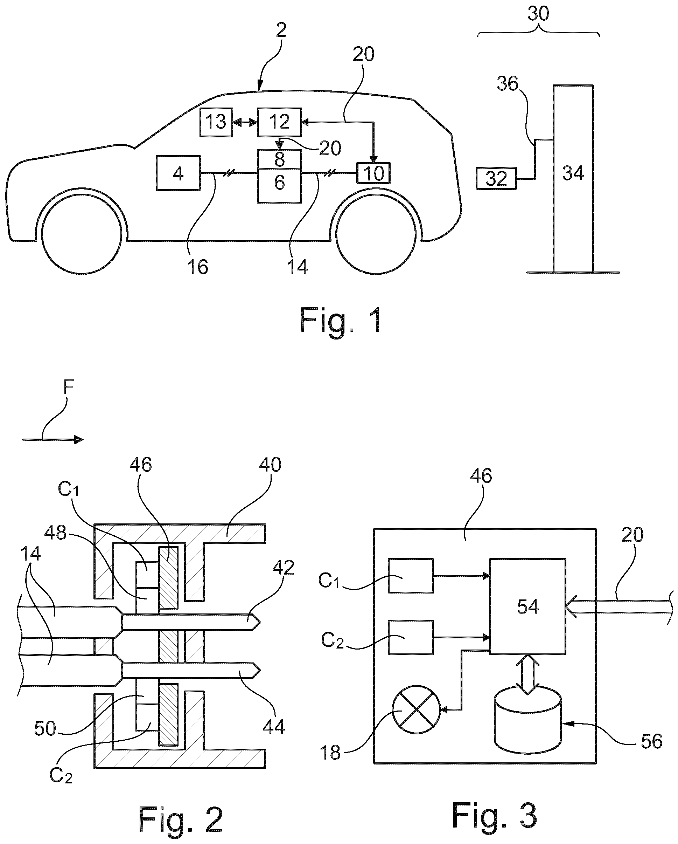

Figure 1 shows a vehicle 2 such as an electric or hybrid vehicle. The vehicle 2 is equipped with :
- an electric motor 4 capable of rotating the drive wheels of vehicle 2,
- a battery 6 that stores the energy needed to power various electrical loads on board the vehicle 2, including the engine 4,
- a battery management system 8 which regulates the charging and discharging current of battery 6,
- a charging inlet 10,
- an on-board computer 12, and
- a man-machine interface 13.

The battery 6 is electrically connected to charging inlet 10 and to the various electrical loads on board the vehicle 2 via electrical cables 14, 16.

System 8 is better known by the acronym BMS ("Battery Management System").

The man-machine interface 13 is used to communicate information to a human being, in particular on the progress of the battery 6 charging process. For example, the interface 13 includes a LED 18 (Fig. 3) which, depending on its state, indicates a fault. For example, this LED 18 turns red or orange to indicate to the user a fault in the battery 6 charging process.

The vehicle 2 also comprises a communication bus 20 that links the various electronic devices on board the vehicle 2 that need to communicate with each other. In particular, this bus 20 connects charging inlet 10 to on-board computer 12 and on-board computer 12 to battery management system 8. For example, bus 20 is a CAN (Controller Area Network) bus or a LIN (Local Interconnect Network) bus.

Charging inlet 10 is used to connect battery 6 to a charging station 30 external to vehicle 2, in order to recharge battery 6. To this end, station 30 typically comprises :
- a charging coupler 32 designed to be alternately inserted into and withdrawn from charging inlet 10,
- a source 34 of electrical energy, and
- an electrical power cable 36 which electrically connects the charging coupler 32 to the electrical power source 34.

Here, for example, source 34 delivers a DC current in excess of 125 A or 500 A or 800 A.

Figure 2 shows a schematic illustration of the structure of charging inlet 10. In this example of an embodiment, the structure of charging inlet 10 is identical to the structure of a known charging inlet. By way of illustration, charging inlet 10 is structurally identical to one of the charging inlets described in the following patent applications: EP4272994A1 and EP4056410A1. It is emphasized that the charging inlets described in these patent applications are equipped with temperature sensors mounted on a printed circuit board. Thus, in the following, the structure of charging inlet 10 is not described in detail and only the elements necessary for understanding the invention are schematically shown in Figure 2.

Charging inlet 10 comprises a housing 40, fastened to the body of vehicle 2 without any degree of freedom, and electrical terminals.

Typically, housing 40 is made of an electrically insulating material such as plastic, and is shaped to receive and protect the various components of charging inlet 10.

Each electrical terminal of charging inlet 10 is electrically and mechanically connected to the end of a respective electrical cable 14. To simplify Figure 2, only two terminals 42, 44 are shown here. However, in practice, a charging inlet such as charging inlet 10 has at least two electrical terminals and often a number N of electrical terminals greater than or equal to three or four or more.

Each terminal 42, 44 is capable of being electrically connected and, alternately, reversibly disconnected from a corresponding electrode of the charging coupler 32. To this end, terminals 42, 44 are essentially straight rods, made of electrically conductive material, and whose mechanical dimensions are both adapted to fit into the corresponding electrode of coupler 32 and to withstand, without failure, the intensity of the charging current. In the case of fast or ultra-fast charging, the charging current can be in excess of 125 A or 500 A or 800 A. Here, each terminal extends mainly parallel to a direction F shown in Figure 2.

Charging inlet 10 also comprises a printed circuit board 46 housed inside housing 10. Here, the various electronic components of charging inlet 10 are mounted on this printed circuit board 46. For example, printed circuit board 46 extends mainly in a plane perpendicular to direction F. In addition, the printed circuit board 46 is crossed by terminals 42, 44. In Figure 2, only two temperature sensors C₁, C₂, mounted on printed circuit board 46, are visible. These sensors C₁, C₂ measure the temperatures of terminals 42 and 44 respectively.

Each sensor C₁, C₂ is electrically isolated from the current flowing through the terminals of charging inlet 10. In addition, sensors C₁, C₂ must be thermally connected to terminals 42 and 44 respectively. For this purpose, sensor C₁ is thermally connected to terminal 42 via an element 48 made of dielectric material. This element 48 is in direct mechanical contact, on the one hand, with terminal 42, and, on the other hand, with sensor C₁. The thermal conductivity of element 48 is typically greater than 1 W/(m.K) or 2 W/(m.K). Element 48 may be made of a single dielectric material or, on the contrary, of a juxtaposition of several dielectric materials.

Sensor C₂ is thermally connected to terminal 44 via an element 50. Element 50 is, for example, identical to element 48 except that it is interposed between terminal 44 and sensor C₂.

Figure 3 shows in more detail some of the electronic components mounted on the printed circuit board 46. In this figure, only those components that are useful for understanding the invention are shown. Here, the following components are mounted on printed circuit board 46: sensors C₁, C₂, LED 18, a processor 54 and a memory 56.

LED 18 is housed in charging inlet 10 so that it is visible from the outside when the battery 6 is being charged.

Processor 54 is able to execute instructions stored in memory 56.

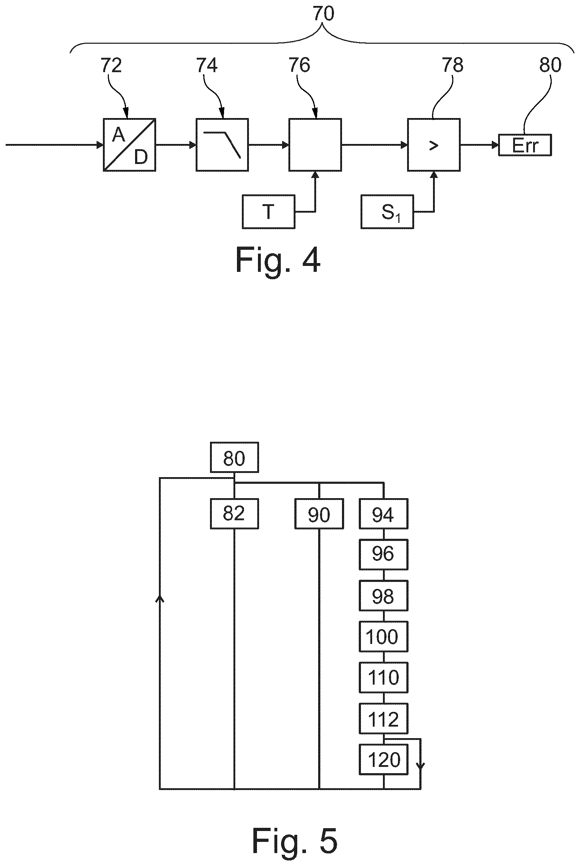

Here, memory 56 contains the instructions and data required to implement the method of Figure 5.

Figure 4 shows, in the form of a series of functional blocks, a chain 70 for processing the temperatures measured by sensor C₁ to detect a fault D₁ in the electrical connection between charging inlet 10 and coupler 32. Here, fault D₁ is a rapid increase of the temperature of terminal 42. Such a rapid increase of the temperature is generally caused by an abnormally high electrical resistance of the electrical connection between charging inlet 10 and coupler 32. This chain 70 comprises in succession :
- an analog/digital converter 72, which converts the analog signal supplied by sensor C₁ into a corresponding digital signal,
- a low-pass filter 74 which filters the digital signal,
- a differentiator 76 which calculates a slope of the digital signal over a time interval,
- a comparator 78 which compares the calculated slope with a pre-stored threshold S₁, and
- a block 80 which detects fault D₁ when threshold S₁ is crossed.

Typically, the cut-off frequency of filter 74 is between 0.1 Hz and 1 Hz. For example, here the cut-off frequency is 0.3 Hz.

The value of threshold S₁ is determined, for example by simulation or experimentally, to detect fault D₁ as quickly as possible, while keeping false positives detection to a minimum. Here, for example, threshold S₁ is equal to 0.6. Threshold S₁ is pre-stored in memory 56.

An identical processing chain is implemented in processor 54 to process temperature measurements from sensor C₂.

The charging method for vehicle 2 will now be described in relation to the method shown in Figure 5.

Initially, in a step 80, when it is necessary to charge the battery 6, the driver of vehicle 2 plugs the coupler 32 into charging inlet 10.

Then, in a charging step 82, current flows through cables 36 and 14 and through the terminals of charging inlet 10 to charge battery 6 from electrical energy source 34. In step 82, for example, the charging current is regulated by system 8.

In parallel with step 82, in step 90, sensor C₁ continuously measures the temperature of terminal 42.

In parallel with step 90, in a step 94, at each sampling instant tᵢ of a chronological sequence of temporally ordered instants {t₀, t₁, ...tᵢ₋₁, tᵢ, ...}, the processor 54 acquires a raw temperature Trᵢ measured by sensor C₁ at that instant tᵢ. Here, the index i is a positive integer identifying a particular instant in the sequence {t₀, t₁, ...tᵢ₋₁, tᵢ, ...}. Here, the duration Dₑ of the time interval between any two successive instants tᵢ₋₁ and tᵢ in the sequence {t₀, t₁, ...tᵢ₋₁, tᵢ, ...} is constant. Typically, the duration Dₑ is between 100 ms and 10 s, and more often between 0.5 s and 2 s. For example, the duration Dₑ is equal to 1 s.

In step 94, the analog signal delivered by sensor C₁ is first converted into a digital signal by converter 72 and then filtered by filter 74 to obtain a temperature Tᵢ acquired at instant tᵢ.

Then, in a step 96, the processor 54 calculates a slope pᵢ with which the temperature varies at instant tᵢ. The slope pᵢ is calculated from :
- the new temperature Tᵢ acquired at instant tᵢ,
- a temperature Tᵢ₋ₖ acquired at a instant tᵢ₋ₖ prior to instant tᵢ,
- the duration of the time interval between instants tᵢ and tᵢ₋ₖ.

For example, here slope pᵢ is calculated using the following relationship: pᵢ = (Tᵢ-Tᵢ₋ₖ)/(tᵢ-tᵢ₋ₖ), where k is a predetermined positive integer. Here, k is chosen so that the duration of time interval tᵢ-tᵢ₋ₖ is between 1s and 7s. For example, here k is chosen so that the duration of time interval tᵢ-tᵢ₋ₖ is equal to 1s.

Then, in step 98, processor 54 compares the calculated slope pᵢ with threshold S₁. If the slope pᵢ equals or exceeds threshold S₁, fault D₁ is detected. At this stage, this is an early detection of a fault because it occurs well in advance of the detection of a fault D₂ which is detected by comparing the measured temperature Tᵢ with a pre-recorded threshold. Fault D₂ is also generally caused by an abnormally high electrical resistance of the electrical connection between charging inlet 10 and coupler 32. In order to signal the detection of fault D₁, processor 54 set a flag F₁ equal to a first predetermined value, for example 1. Conversely, if slope pᵢ is less than threshold S₁, processor 54 set flag F₁ to a second predetermined value, for example zero, to indicate the absence of the detection of fault D₁.

In step 100, processor 54 transmits temperature Tᵢ and flag F₁ to the on-board computer 12. So, in addition to temperature Tᵢ, on-board computer 12 also receives flag F₁, which tells it whether or not the detection of fault D₁ occurred.

In response to receiving the temperature Tᵢ, the on-board computer 12 compares, in a step 110, the received temperature Tᵢ with a prerecorded threshold S₂.

Threshold S₂ is determined, either experimentally or by simulation or imposed by a standard, to enable a countermeasure to be triggered early enough so that the maximum actual temperature reached by terminal 42 cannot damage charging inlet 10. For example, here the threshold S₂ is equal to 90°C.

When temperature Tᵢ is greater than or equal to threshold S₂, on-board computer 12 detects the presence of fault D₂ in step 112. Conversely, if temperature Tᵢ is below threshold S₂, fault D₂ is not detected.

The method proceed to a step 120 if fault D₂ has been detected in step 112 or if the received flag F₁ signals the detection of fault D₁, i.e flag F₁ is equal to 1. In step 120, on-board computer 12 automatically and immediately triggers the execution of one or more countermeasures selected from the group consisting of the following countermeasures:
- Countermeasure 1) : cut-off of charging current,
- Countermeasure 2) : lower charging current intensity while keeping charging battery 6,
- Countermeasure 3) : control of man-machine interface 13 to indicate to the user the existence of a fault.

In this embodiment, for example, if fault D₂ is detected one of the Countermeasures 1) and 2) is immediately triggered. If fault D₁ is detected, the on-board computer 12 immediately triggers Countermeasure 3).

If flag F₁ is equal to zero and if fault D₂ has not been detected in step 112, step 120 is skipped so that no countermeasure is triggered.

In this embodiment, countermeasure 3) consists of controlling LED 18 to indicate the presence of fault D₁. In this way, the user can react immediately by disconnecting the coupler 32 and then changing charging station, or by disconnecting and then reconnecting the coupler 32 to reset the charging process.

Countermeasure 2) consists of reducing the charging current intensity without canceling it, and therefore without interrupting the charging process of the battery 6. For example, the charging current intensity is kept above 1A or 10A.

The method then returns to step 94 to execute steps 94 to 120 again at instant tᵢ₊₁.

Everything described above for the particular case where temperature measurements are provided by sensor C₁ is also carried out in parallel in the same way with temperatures provided by sensor C₂.

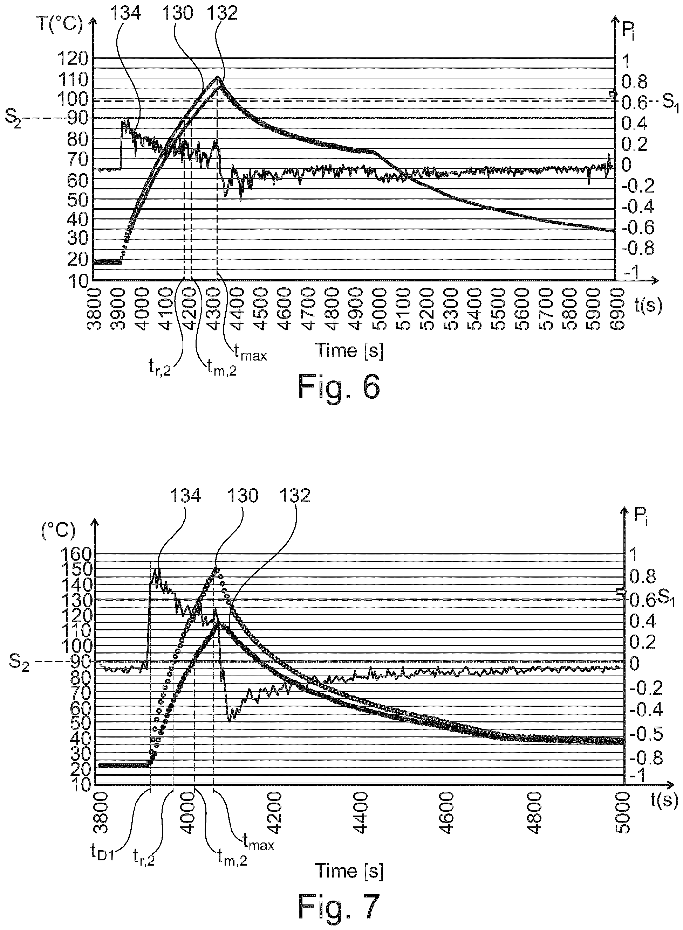

Figures 6 and 7 illustrate how the method of Figure 5 works in two different situations. In these figures, the x-axis represents time in seconds. The y-axis on the left represents temperature in °C. The y- axis on the right represents the value of the slope pᵢ. Curve 130 shows the evolution over time of the actual temperature of terminal 42. Curve 132 represents the evolution over time of the temperature measured at the same instant by sensor C₁. Finally, curve 134 represents the evolution over time of the calculated slope pᵢ.

Figure 6 corresponds to a situation where the electrical resistance of the connection between charging inlet 10 and coupler 32 is slightly higher than its usual value. The usual value of the electrical connection is often less than 100 µΩ or 50 µΩ. For example, here the electrical connection resistance is slightly greater than 100 µΩ. As illustrated by curve 134, in this situation the temperature of terminal 42 rises faster than in the complete absence of fault, but not fast enough for the calculated slope pᵢ to exceed threshold S₁. In this case, the actual temperature of terminal 42 exceeds threshold S₂ at instant t_{r,2}. However, due to the presence of the dielectric material element 48, the temperature measured by sensor C₁ exceeds threshold S₂ only at a later instant t_{m,2}. In other words, fault D₂ is only detected at instant t_{m,2}. The delay in detecting fault D₂ caused by the thermal inertia of element 48 is about 40 s. At instant t_{m,2}, the actual temperature of terminal 42 is about 95°C. At instant t_{m,2}, the on-board computer 12 triggers countermeasure 2), i.e a reduction of the charging current intensity. Due to thermal inertia, the actual temperature of terminal 42 continues to rise until instant tₘₐₓ, at which point it decreases. At instant tₘₐₓ, in this example, the maximum actual temperature of terminal 42 reached is around 110°C, which does not damage charging inlet 10.

Figure 7 corresponds to a situation where the electrical resistance of the connection between charging inlet 10 and coupler 32 is even higher than in the situation of figure 6. For example, here the electrical connection resistance is greater than 200 µΩ or 300 µΩ. As illustrated by curve 134, in this situation, the temperature of terminal 42 rises sufficiently rapidly for the calculated slope pᵢ to exceed threshold S₁ at an instant t_{D1}. At instant t_{D1}, on-board computer 12 automatically triggers countermeasure 3). At instant t_{D1}, the actual temperature of terminal 42 is well below threshold S₂. Thus, by applying the countermeasure 3) from instant t_{D1}, the user can undertakes actions that will maintains the actual temperature of terminal 42 well below threshold S₂, ensuring that charging inlet 10 cannot be damaged. For example, the user can disconnect coupler 32 from inlet 10.

Beyond instant t_{D1}, curves 130 and 132 shown in Figure 7 correspond to a situation where no early detection of fault D₁ is implemented. In this case, at instant t_{D1}, on-board computer 12 does not trigger any countermeasures, and charging of battery 6 continues normally, as fault D₂ has not yet been detected. In this case, the actual temperature of terminal 42 exceeds threshold S₂ at instant t_{r,2} and the temperature measured by sensor C₁ exceeds threshold S₂ at instant t_{m,2}. At instant t_{m,2}, the actual temperature of terminal 42 is already around 120°C. Even if, at this instant t_{m,2}, the on-board computer 12 triggers countermeasure 2), the actual temperature of terminal 42 continues to rise until instant tₘₐₓ. At instant tₘₐₓ, the actual temperature of terminal 42 is closed to 150°C and begins to damage charging inlet 10. Figure 7 clearly illustrates the benefits of the detection of fault D₁. Indeed, the detection of fault D₁ allows to anticipate the triggering of countermeasure by several tens of seconds, and therefore to react well before the instant t_{m,2}. In the situation of Figure 7, reacting before instant t_{m,2} allows to avoid a situation which could damage charging inlet 10.

### Chapter III: Variants

Other formulas are possible for calculating slope pᵢ. For example, slope pᵢ can be calculated using other values for the number k. The slope pᵢ can also be calculated using several temperatures acquired at previous instants. For example, the slope pi can be calculated using the following formula: pᵢ = [(Tᵢ-Tᵢ₋ₖ)/(tᵢ-tᵢ₋ₖ) + (Tᵢ₋₁-Tᵢ₋₁₋ₖ)/(tᵢ₋₁ - tᵢ₋₁₋ₖ₎]/2.

The decision to trigger a countermeasure can also be made taking into account the detection of several faults. For example, a countermeasure is triggered only if fault D₁ is detected from the measurements of sensor C₁ and the corresponding fault D₁ is detected from the measurements of sensor C₂.

In step 120, the countermeasure triggered can be the same in response of the detection of faults D₁ and D₂. For example, in case of detection of fault D₁ or D₂, then the countermeasure triggered in step 120 is countermeasure 1), that is the cut off of the charging current. In step 120, the countermeasure triggered in response to detection of fault D₁ or fault D₂ can be anyone of the countermeasures in the group of countermeasures 1), 2) and 3).

The comparison of slope pᵢ with threshold S₁ can be implemented in the on-board computer 12 instead of in the processor 54. In this case, each time the processor 54 calculates a slope pᵢ, it transmits this calculated slope pᵢ to the on-board computer 12 via the bus 20. The on-board computer 12 then compares the slope pᵢ received with threshold S₁ in order to carry out the detection of fault D₁. In such a case, flag F₁ is not sent on bus 20.

In another embodiment, the calculation of the slope pᵢ is additionally performed by the on-board computer 12 and not implemented in the processor 54. In this case, only the measured temperatures Tᵢ are transmitted to the on-board computer 12. Conversely, slope pᵢ and flag F₁ are not transmitted by the processor 54 to the on-board computer 12.

It is also possible to implement steps 110 and 112 to detect fault D₂ by comparison of temperature Tᵢ with threshold S₂, in processor 54. In this case, processor 54 transmits to on-board computer 12 only the information that fault D₁ or D₂ has been detected.

### Other variants :

Alternatively, the charging inlet 10 can be fitted with one or more than two temperature sensors. In this case, the detection method described above can be applied to the measurements of each of these temperature sensors.

When the charging inlet has several temperature sensors, it is also possible to average the temperatures measured by these different sensors to obtain, at each instant tᵢ, an average temperature T_{m,i}. The detection method described above can then be applied using temperature T_{m,i} instead of temperature Tᵢ.

The various electronic components of charging inlet 10 are not necessarily mounted on the same printed circuit board 46. For example, the temperature sensors and/or LED 18 are not mounted directly on printed circuit board 46, but are connected to printed circuit board 6 via wires.

Other position of the circuit board 46 within inlet 10 are possible. For example, circuit board 46 may also extend mainly in a direction parallel to direction F.

LED 18 can also be located outside the charging inlet 10. For example, LED 18 is integrated into the dashboard of vehicle 2. In this latter case, LED 18 is controlled by the on-board computer 12 rather than by processor 54.

The man-machine interface 13 can be designed in other ways. For example, in addition to or instead of the LED 18, the interface 13 may include a display, such as the dashboard display of vehicle 2. In this case, in response to the detection of fault D₁ in the course of the charging process, on-board computer 12 controls the dashboard display to report fault D₁ in the form of a character string. Interface 13 may also include the user's smartphone screen. In this case, in response to the detection of fault D₁, the on-board computer 12 transmits, via a wireless link, a message which is displayed on the user's smartphone screen. The wireless link may be a Bluetooth link or a link established via a wireless telephone network. Interface 13 may also include a loudspeaker to indicate the presence of fault D₁ to the user via a sound or voice message.

In an other embodiment, the user is not informed of the detection of fault D₁. In such a case, the detection of fault D₁ is only used to trigger a countermeasure that is not perceptible by a human being. In this embodiment, man-machine interface 13 may be omitted.

Vehicle 2 is also often fitted with an on-board charger (known by the acronym OBC) so that it can be charged from alternating current. In this case, when battery 6 is charged from alternating current, the intensity of the charging current can be regulated and controlled by the on-board charger. Everything that has been described in the particular case where the current flowing through the connection terminals 42, 44 is DC current also applies to the case where the current flowing through the connection terminal is alternating current.

Several of the variants described above can be combined in a single embodiment.

### Chapter IV: Advantages of the described embodiments :

The method described here always uses the comparison of temperature Tᵢ with threshold S₂. This means that all faults detectable with the previously disclosed known method can be detected with this method. In addition, early detection of the fault D₁ using the slope pᵢ, means that, in certain critical situations, the fault D₁ is detected more quickly than fault D₂. This early detection of fault D₁ is useful, as it enables countermeasures to be triggered more quickly, thus preventing excessive heating of the charging inlet 10.

Low-pass filtering of the acquired temperatures increases the reliability of the detection of fault D₁ or D₂.

## Claims

1. Method for detecting a fault in the connection between a charging inlet and a charging coupler, this method comprising:
- the measurement (90) of a temperature of a connection terminal of the charging inlet using a temperature sensor incorporated in this charging inlet and electrically insulated from the connection terminal by a dielectric element and thermally coupled to the connection terminal by this dielectric element,
- in parallel, at each instant tᵢ of a chronological sequence of instants {t₀, t₁, ...tᵢ₋₁, tᵢ, ...}:
- the acquisition (94) of a temperature measured by the temperature sensor at that instant ti,
- the comparison (110) of the acquired temperature with a first pre-recorded threshold, and
- only when the acquired temperature exceeds the first pre-recorded threshold, the detection (112) of a first fault in the connection between the charging inlet and the charging coupler,
**characterized in that** the method also comprises, at each instant tᵢ, the following steps:
- calculating (96), from the temperature acquired at that instant tᵢ and a temperature acquired at an instant preceding that instant tᵢ and the duration of the time interval separating these two instants, a slope with which the temperature varies,
- comparing (98) the calculated slope with a second pre-recorded threshold,
- only when this second pre-recorded threshold is crossed, detection (98) of a second fault in the connection between the charging inlet and the charging coupler.

2. The method according to claim 1, wherein the acquisition (94) of a temperature measured by the temperature sensor comprises the acquisition of raw temperatures and then the filtering, using a low-pass filter, of these raw temperatures to obtain, at each instant tᵢ, a filtered temperature which is acquired as the temperature measured by the temperature sensor.

3. The method according to any one of the preceding claims, wherein, in response to the detection of the first or second fault, the method comprises automatically triggering (120) the execution of one or more countermeasures chosen from the group consisting of the following countermeasures:
- cutting off the current flowing through the connection terminal,
- reducing the intensity of the current passing through the connection terminal while maintaining the current intensity greater than 1 A,
- the control of a man-machine interface to indicate to a user the existence of the fault in the connection between the charging inlet and the charging coupler.

4. Charging inlet for implementing a method, in accordance with anyone of the preceding claims, of detecting a fault in the connection between this charging inlet and a charging coupler, this charging inlet comprising:
- at least one connection terminal (42, 44) able to be mated in and, alternately, demated from a corresponding electrode of the charging coupler in a reversible manner,
- a temperature sensor (C₁, C₂),
- a dielectric element (48, 50) interposed between the connection terminal and the temperature sensor to electrically insulate this temperature sensor from the connection terminal while thermally coupling the temperature sensor to the connection terminal,
- a processor (54) configured to, at each instant tᵢ of a chronological sequence of instants {t₀, t₁, ...tᵢ₋₁, tᵢ, ...}:
- acquire a temperature measured by the temperature sensor at that instant tᵢ,
- transmit, via a communication bus, the acquired temperature to an on-board computer located outside the charging inlet so that the on-board computer can detect a first fault in the connection only when the acquired temperature exceeds a first pre-recorded threshold,
**characterized in that** the processor (54) is also configured to execute the following steps at each instant tᵢ:
- calculate, from the temperature acquired at that instant tᵢ and a temperature acquired at an instant preceding that instant ti and the duration of the time interval that separates these two instants, a slope with which the temperature varies,
- compare the calculated slope with a second pre-recorded threshold,
- only when this second pre-recorded threshold is crossed, detection of a second fault in the connection between the charging inlet and the charging coupler and transmission of this detection of the second fault, via the communication bus, to the on-board computer.

5. Charging inlet according to claim 4, wherein the charging inlet comprises a printed circuit board (46) on which the temperature sensor and the processor are mounted without any degree of freedom.

6. Vehicle comprising:
- a battery (6),
- an on-board computer (12),
- a charging inlet (10) capable of being plugged to a charging coupler of a charging station to charge the battery and, alternately, of being unplugged from this charging coupler,
- electrical cables (14) that electrically connect the charging inlet to the battery to allow the battery to be charged when the charging inlet is connected to the charging coupler, and
- a communication bus (20) that connects the charging inlet to the on-board computer, **characterized in that**:
- the charging inlet is conform to anyone of claims 4 to 5, and
- the on-board computer is configured to receive the detection of the second fault transmitted by the processor of the charging inlet and, in response, automatically trigger the execution of one or more countermeasures chosen from the group consisting of the following countermeasures:
- cutting off the current passing through the connection terminal,
- reducing the intensity of the current passing through the connection terminal while maintaining the current intensity greater than 1 A,
- controlling a man-machine interface to indicate to a user the existence of the fault in the connection between the charging inlet and the charging coupler.
